(19) Europäisches Patentamt / European Patent Office / Office européen des brevets

(11) **EP 2 058 340 A1**

(12) **EUROPEAN PATENT APPLICATION**

(43) Date of publication:
**13.05.2009 Bulletin 2009/20**

(51) Int Cl.:
***C08F 210/06*** *(2006.01)*

(21) Application number: **07254418.2**

(22) Date of filing: **09.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Borealis Technology OY**
**06101 Porvoo (FI)**

(72) Inventors:
- **Bernt-Äke, Sultan**
  **44442 Stenungsund (SE)**
- **Pham, Tung**
  **4040 Linz (AT)**
- **Nenseth, Svein**
  **3739 Skien (NO)**
- **Doshev, Petar**
  **3920 Porsgrunn (NO)**
- **Follestad, Arild**
  **3960 Stathelle (NO)**

(74) Representative: **Gordon, Kirsteen Helen**
**Frank B. Dehn & Co.**
**St Bride's House**
**10 Salisbury Square**
**London**
**EC4Y 8JD (GB)**

(54) **Polypropylene Copolymer**

(57) The invention provides a propylene polymer comprising 1-50 tertiary double bonds per 10,000 carbon atoms of the main chain of the polymer. The polymer is obtained using a Ziegler Natta catalyst. The invention further provides a long chain branched propylene polymer obtainable from the afore-mentioned propylene polymer comprising tertiary double bonds

NON-PEROXIDE TREATED (Table 1)

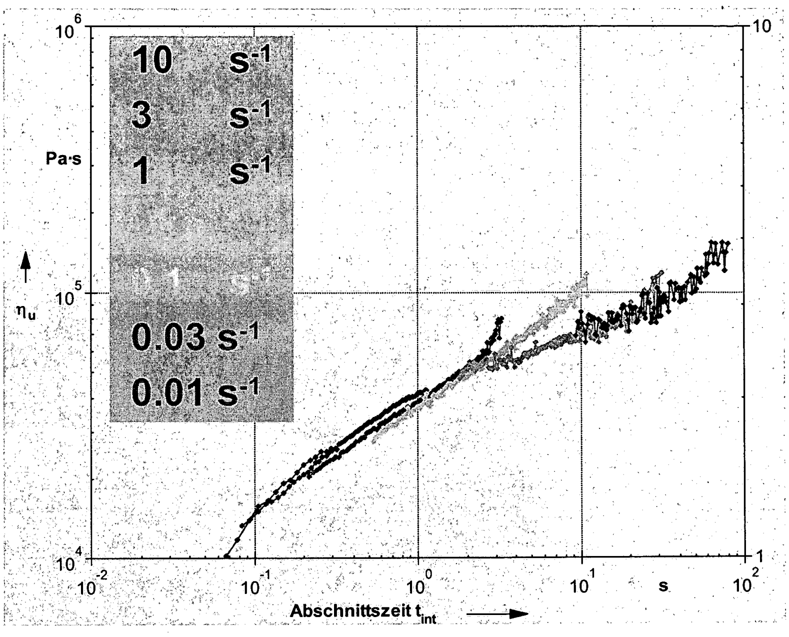


Comparative example C1

FIG. 1

EP 2 058 340 A1

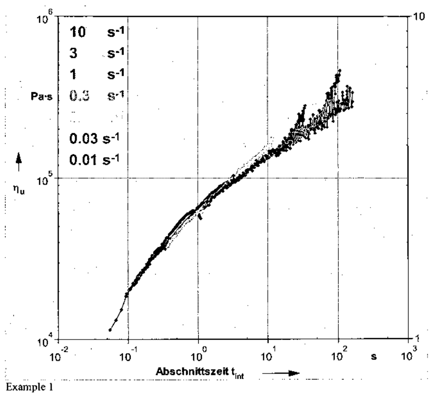


Example 1

FIG. 1 (CONTINUED)

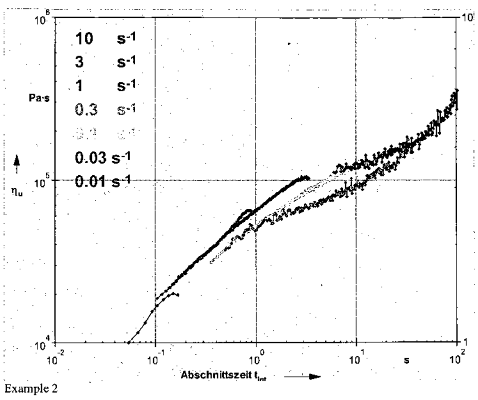


Example 2

FIG. 1 (CONTINUED)

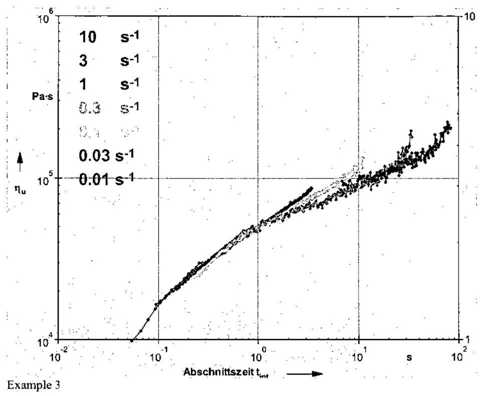


Example 3

FIG. 1 (CONTINUED)

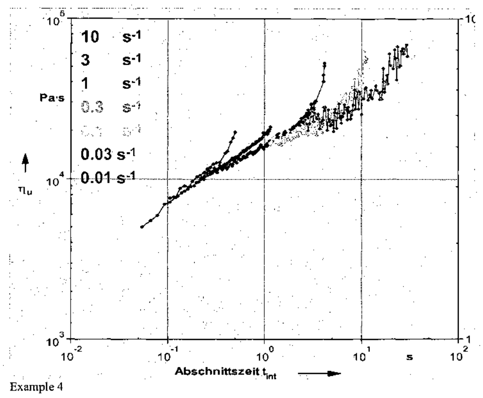


Example 4

FIG. 1 (CONTINUED)



(Cont. next page)

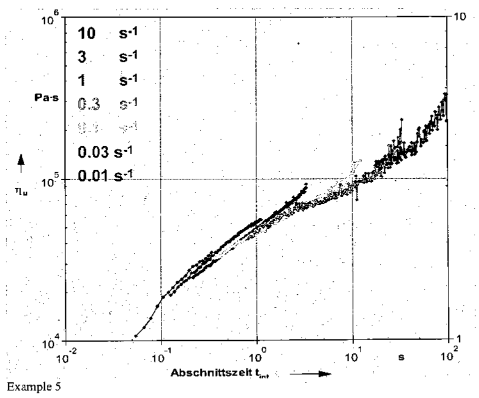


Example 5

FIG. 1 (CONTINUED)

**PEROXIDE TREATED (Table 2)**

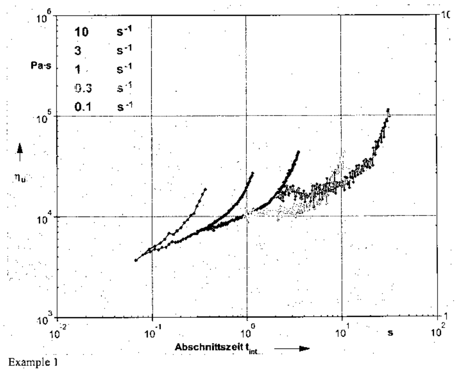


Example 1

FIG. 1 (CONTINUED)

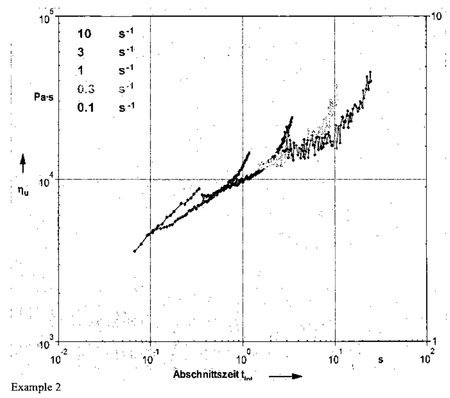


Example 2

FIG. 1 (CONTINUED)

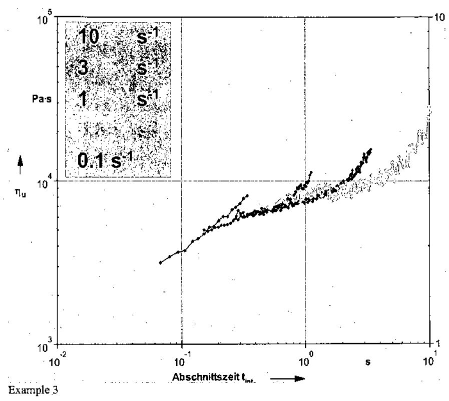


Example 3

FIG. 1 (CONTINUED)

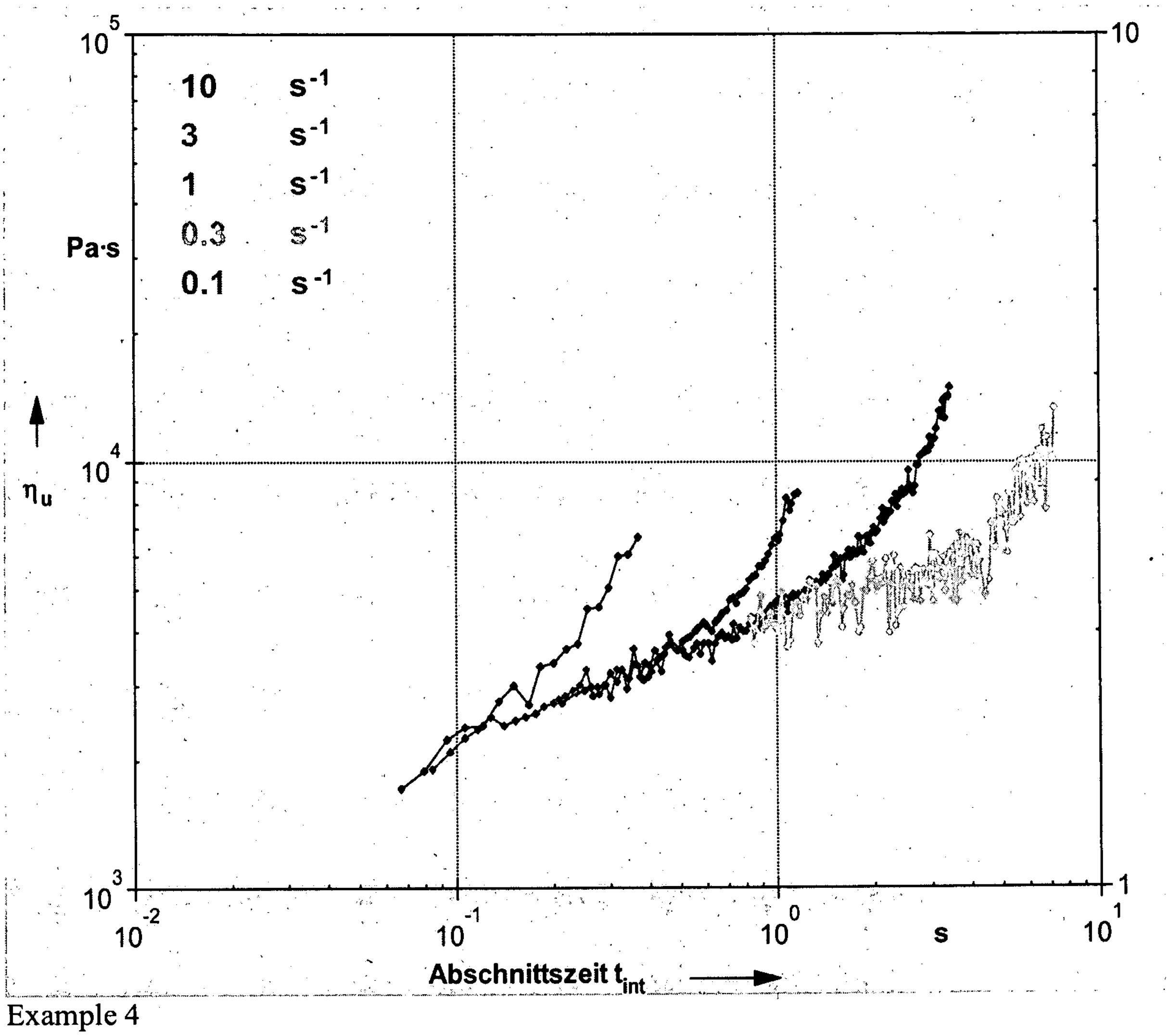


Example 4

FIG. 1 (CONTINUED)

**Description**

FIELD OF INVENTION

The present invention relates to a long chain branched propylene polymer, to uses of said polymer and to processes for making said polymer from a propylene polymer comprising tertiary double bonds. The invention also relates to the propylene polymer comprising tertiary double bonds *per se,* to processes for making said polymer and to uses of said polymer.

BACKGROUND

Polypropylene having long chain branching is known in the art and exhibits improved melt strength and strain hardening behaviour compared to conventional linear polypropylene.

Long chain branching is typically introduced into polypropylene by post polymerisation reactor treatment. This treatment usually comprises the following steps:

(i) a first soaking step wherein particles of linear polypropylene are mixed with an effective amount of an organic peroxide, such as acyl peroxide or alkyl peroxide, and with volatile bifunctional monomers (e.g. divinyl compounds, allyl compounds and dienes), which are typically absorbed by the particulate propylene polymer from the gas phase at temperatures of 30-100 °C; and

(iii) a second thermal treatment step wherein the particles of linear polypropylene containing the absorbed peroxide and bifunctional monomer are heated and molten at a temperature of 200-250 °C, usually in an atmosphere comprising inert gas. This thermal treatment causes the peroxide to decompose and generate free-radicals. Reactions therefore occur between the polymer chains, the free radicals and the bifunctional monomers to link polymer chains together thereby producing propylene polymer with long chain branches.

The bifunctional monomers used in this treatment are often called "chain extender" compounds. The purpose of the "chain extenders" is to provide double bonds that can react to form branches on the polypropylene and/or form cross links within its structure.

Unfortunately the use of chain extenders in the production of high melt strength, strain hardening polypropylene has disadvantages. The sorption process is time consuming and complex and therefore increases the cost of the final polymer, but in the highly competitive field of polymers this is of course highly undesirable.

The sorption process is also difficult to control. It is not known in the sorption process where the chain extender attaches. Moreover, in the case of heterophasic polymers, it is also not known in which phase extenders preferentially adsorb. As a result it is difficult to tailor the properties of the final polymer to any particular specification.

Moreover it is common to use highly volatile chain extender compounds in the sorption process so that any unreacted extender can easily be removed by volatilisation at the end of the reaction. Unfortunately, however, this makes it virtually impossible to achieve a homogeneous distribution of extender within the polymer prior to thermal treatment and consequently cross linking reactions tend to take place to different degrees. Thus in some regions of the polymer low levels of cross linking may be present, whereas in other areas high levels of cross linking occur and gels are created.

Heterogeneity is therefore a common problem found in long chain branched polypropylene. This heterogeneity often appears in the form of gels, i.e. discrete regions of polymer having a higher molecular weight than the rest of the polymer. Gels are, however, undesirable as they cause problems during processing of the polymer, especially into fibres and films. For example, the occurrence of gels in the polypropylene increases the tendency for fibres to rupture during processing and for dies to become clogged.

The visual appearance of a polypropylene containing gels is also harmed. This is particularly detrimental in films where even relatively small gels are easily observable after blowing and in coloured products where gels appear as white dots.

A need therefore exists for alternative polypropylene that exhibits strain hardening behaviour. Ideally the polypropylene should also be essentially gel-free.

It has now been surprisingly found that gel-free, strain hardening polypropylene can be produced without the need for chain extenders. More specifically it has been discovered that propylene can be copolymerised with a small amount of certain dienes to yield copolymer that still contains double bonds at the end of the polymerisation reaction. Furthermore these double bonds can be utilised without the need for any chain extender compounds to provide a strain hardening polypropylene. Surprisingly low amounts of diene are required to provide this advantageous effect.

There are a few disclosures in the prior art of polypropylene containing double bonds but none suggest that they may be used to obtain a strain hardening polypropylene. EP-A-0401993, for example, describes an unsaturated copolymer consisting essentially of propylene, a branched diene selected from 6-methyl-1,6-octadiene and 7-methyl-1,6-octadiene and optionally ethylene. The amount of branched diene present in is in the range 0.5-15 mol% and is said to provide the polymer with paintability, printability and good cross linking ability. There is, however, no illustration of a long chain branched polymer in EP-A-0401993 or any mention of strain hardening behaviour of the resulting polymers.

US 4,366,296 discloses similar polymers. More specifically it discloses unsaturated random copolymers of ethylene, propylene or 4-methyl-1-pentene with a branched 1,4-diene. Examples of suitable branched 1,4-dienes are 4-methyl-1,4-hexadiene and 5-methyl-1,4-hexadiene. The amount of 1,4-diene that may be present in these polymers is 0.01-30 mol%, though only copolymers comprising 1.1-8.4 mol% are actually exemplified. The diene is said to provide the copolymer with pendent double bonds that provide the copolymer with improved properties such as adherence, printability and paintability and which can be modified by reactions including oxidation, graft polymerisation and cross linking. As in EP-A-0401993, however, there is no illustration of long chain branching and there is no mention whatsoever of the strain hardening behaviour of the resulting polymers.

SUMMARY OF INVENTION

Viewed from a first aspect the invention provides a propylene polymer comprising 1-50 tertiary double bonds per 10,000 carbon atoms, wherein said polymer is obtained using a Ziegler Natta catalyst.

Viewed from another aspect the invention provides a process for preparing a propylene polymer as hereinbefore defined comprising copolymerising propylene and a tertiary diene using a Ziegler Natta catalyst.

Viewed from another aspect the invention provides a composition comprising a propylene polymer as hereinbefore defined.

Viewed from a further aspect the invention provides use of a propylene polymer as hereinbefore defined in the manufacture of a long chain branched propylene polymer.

Viewed from a still further aspect the invention provides a long chain branched propylene polymer obtainable from a propylene polymer as hereinbefore defined by post reactor treatment (e.g. with a free radical initiator).

Viewed from a yet further aspect the invention provides a process for preparing a long chain branched propylene polymer as hereinbefore defined comprising:

(i) copolymerising propylene and a tertiary diene using a Ziegler Natta catalyst to produce a propylene polymer comprising 1-50 tertiary double bonds per 10,000 carbon atoms; and

(ii) treatment of said copolymer (e.g. with a free radical initiator) to introduce long chain branching.

Viewed from a further aspect the invention provides use of a long chain branched propylene polymer as hereinbefore defined in moulding or extrusion.

A process for preparing an article comprising moulding or extruding a long chain branched propylene polymer as hereinbefore defined forms a further aspect of the invention.

Moulded or extruded articles comprising a long chain branched propylene polymer as hereinbefore defined form a final aspect of the invention.

DETAILED DESCRIPTION

Definitions

By the term "propylene polymer" is meant herein a polymer that comprises at least 50 mol% units derived from propylene.

By the term "tertiary double bond" is meant herein a double bond that is substituted by three non-hydrogen groups (e.g. by three alkyl groups). Herein tertiary double bonds may be designated by the term "$RCH=R_2$" wherein R is not hydrogen (e.g. R is hydrocarbyl, especially alkyl). By the phrase "x tertiary double bonds per 10,000 carbon atoms" is meant herein that x tertiary double bonds are present per 10,000 carbon atoms present in the backbone or main chain of the polymer.

By the term "diene" is meant herein a compound comprising two double bonds. By the term "tertiary diene" is meant a diene wherein one of the double bonds is a tertiary double bond.

By the term "long chain branched propylene polymer" is meant herein a polymer wherein a proportion (e.g. 1-40 %wt) of the polymer chains has at least one long chain branch. The long chain branched propylene polymer may or may not form a continuous network throughout the polymer. Polymers having a continuous network are referred to herein as cross linked polymers. Preferred long chain branched propylene polymers of the present invention are not cross linked.

By the term "long chain branch" is meant herein a branch comprising at least 20 carbon atoms, more preferably at least 100 carbon atoms, e.g. at least 1000 carbon atoms.

The term "propylene homopolymer" is intended to encompass polymers which consist essentially of repeat units deriving from propylene. Homopolymers may, for example, comprise at least 99 %, e.g. 100 %, by weight of repeat units deriving from propylene.

The term "propylene copolymer" is intended to encompass polymers comprising repeat units from propylene and at least one other monomer. In typical copolymers at least 1 %, more preferably at least 2 % by weight of repeat units derive from at least one monomer other than propylene.

The term "heterophasic propylene copolymer" is intended to encompass polymers comprising at least two phases (e.g. a matrix phase and a dispersed phase). The matrix phase is preferably crystalline. The dispersed phase is preferably amorphous. Preferred heterophasic propylene polymers comprise at least 50 wt%, more preferably at least 65 wt%, still more preferably at least 75 wt% matrix phase, e.g. at least 80 wt% matrix phase. Preferably the matrix phase does not comprise more than 95 wt% of the heterophasic propylene polymers, e.g. not more than 90 wt%.

As used herein, the term "strain hardening" refers to the strain hardening behaviour of the polymer at 180 °C and a certain Hencky strain rate (e.g. 0.3, 1.0 or 10 $s^{-1}$). It is expressed by the formula:

$$SH_{3.0/2.5} = (\log(\eta^{e}_{3.0}) - \log(\eta^{e}_{2.5})/(\log(3.0) - \log(2.5))$$

where log is Brigg's logarithm, and $\eta^{e}_{3.0}$ and $\eta^{e}_{2.5}$ are the elongation viscosities at 3.0 and 2.5 % strain respectively.

A polymer with a higher value of SH is more strain hardening than a polymer with a lower SH value.

The term "gel" is meant herein to refer to an area of at least 50 microns in size in its largest dimension which comprises polymer having a higher molecular weight and a higher viscosity than the surrounding polymer matrix. Gel formation may be caused by cross linking. Gels can be observed by microscopy as described in the examples herein.

As used herein the term "gel free" is intended to mean that no inhomogeneities are observed in the polymer when 2 g pellet of polymer is melt pressed to form a plaque having a diameter of 12 mm and examined by light microscopy using a 50X magnification.

<u>Propylene Polymer Properties</u>

The propylene polymer of the invention preferably comprises at least 80 mol% units derived from propylene. Still more preferably the propylene polymer comprises at least 95 mol% units, especially preferably at least 99 mol% units derived from propylene (e.g. 97 to 99.9 mol% units derived from propylene).

The propylene polymer further comprises 1-50 tertiary double bonds per 10,000 carbon atoms. Still more preferably the propylene polymer comprises 1-25 tertiary double bonds per 10,000 carbon atoms (e.g. 1-20 tertiary double bonds per 10,000 carbon atoms).

In preferred propylene polymers of the invention, the tertiary double bonds comprise a unit derived from or originating from a tertiary diene. Preferred polymers of the invention comprise less than 0.5 mol%, more preferably 0.001-0.45 mol%, still more preferably 0.005-0.4 mol%, of a unit derived from a tertiary diene. Indeed an advantage of the propylene polymer of the invention is that only low amounts of tertiary diene (e.g. <0.5 mol%) are required to provide a polymer that can be treated to yield a strain hardening polymer. As such low amounts of diene are used the catalyst activity in the polymerisation reaction is essentially unaffected so productivity remains high and the cost of the polymer is also minimised.

Preferred propylene polymers of the present invention comprise units derived from a tertiary diene that comprises at least 5 carbon atoms in its main chain (e.g. 5 to 20 carbon atoms in its main chain). Preferred tertiary dienes are nonconjugated. Further preferred tertiary dienes are 1,3, 1,5 or 1,7-dienes. Preferably the tertiary diene is not a 1,4-diene.

Particularly preferred polymers of the present invention comprise units derived from a tertiary diene of formula (I):

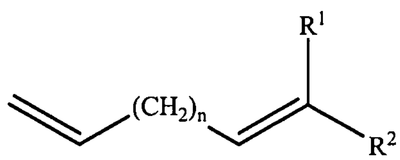

(I)

wherein n is an integer from 0 to 20, preferably 0 to 4 (e.g. 0 or 3); and

$R^1$ and $R^2$ are each independently a $C_{1-6}$ alkyl group).

In dienes of formula (I), it seems that the R groups "shield" the tertiary double bond during the polymerisation reaction so that they do not undergo reaction with propylene and are thus present in the polymer after polymerisation. Under the conditions of post reactor treatment (e.g. with a free radical initiator), however, these double bonds are able to react to form long chain branches in the propylene polymer. Surprisingly the resulting long chain branched polymer exhibits a high melt strength and a strain hardening effect.

Especially preferred polymers of the present invention comprise units derived from a tertiary diene of formula I wherein $R^1$ and $R^2$ are $C_{1-3}$ alkyl (e.g. methyl). Preferably $R^1$ and $R^2$ are identical.

Representative examples of tertiary dienes of formula I include 4-methyl-1,3-pentadiene (MPD), 5-methyl-1,4-hexadiene, 6-methyl-1,5-heptadiene, 7-methyl-1,6-octadiene (MOD), 8-methyl-1,7-nonadiene and 9-methyl-1,8-decadiene. Particularly preferred dienes of formula I are MPD and MOD, especially MOD.

The propylene polymer of the invention may additionally comprise units from one or more other monomers. Units may, for example, be present that derive from $\alpha$-olefins having 2 or 4-10 carbon atoms. Examples of suitable monomers include ethylene, but-1-ene, pent-1-ene, hex-1-ene and oct-1-ene. Ethylene and butene are preferred.

Preferred propylene polymers of the invention comprise less than 40 mol% of units deriving from $\alpha$-olefin having 2 or 4-10 carbon atoms. Still further preferred propylene polymers comprise less than 20 mol%, especially preferably less than 10 mol%, e.g. less than 5 mol% of units deriving from $\alpha$-olefin having 2 or 4-10 carbon atoms. Particularly preferred propylene polymers consist essentially (e.g. consist of) units derived from propylene and a tertiary diene.

The polypropylene polymer of the invention preferably has a melt flow rate ($MFR_2$) in the range 0.01 to 100 g/10 min, preferably 0.1 to 20 g/10 min, more preferably 0.5 to 2 g/10 min. Preferably the melt flow rate ($MFR_2$) of the propylene polymer is less than 2 g/10 min.

The polypropylene polymer preferably has a melting point of greater than 150 °C, more preferably greater than 155 °C, still more preferably greater than 160 °C (e.g. around 150 to 165 °C or 155 to 160 °C).

The polypropylene polymer is also preferably partially crystalline, e.g. having a crystallinity of the order of 20 to 50 %, e.g. 25 to 40 %. The xylene soluble fraction of the propylene polymer can range from 0.1 to 20 %, preferably 1 to 15 wt%. Preferably the xylene soluble fraction of the polypropylene is less than 10 wt%, more preferably less than 7 wt%.

The propylene polymer of the invention is preferably homogeneous in structure (e.g. gel free). Preferably the propylene polymer is soluble in decalin at 135 °C.

Preferably the MWD of the propylene polymer is in the range 1.5 to 10, more preferably 2 to 8, still more preferably 4 to 7, e.g. about 5 to 6.

The propylene polymer of the invention may be unimodal or multimodal (e.g. bimodal) with respect to molecular weight distribution. The molecular weight profile of a multimodal polymer does not consist of a single peak but instead comprises the combination of two or more peaks (which may or may not be distinguishable) centred about different average molecular weights as a result of the fact that the polymer comprises two or more separately produced components.

When the propylene polymer is multimodal, its components may be propylene homopolymers or propylene copolymers. Preferably, however, in such polymers the propylene polymer components are different copolymers. In multimodal propylene polymers at least 20 wt%, more preferably at least 30 wt%, still more preferably at least 40 wt% of each propylene component (e.g. homopolymer and copolymer) is present based on the total weight of the polymer.

Preferably the propylene polymer of the present invention is unimodal with respect to molecular weight distribution.

Preparation of Propylene Polymer

The propylene polymer of the invention may be prepared in a single stage polymerisation (e.g. a continuous single stage polymerisation) or by a two or more stage polymerisation using a Ziegler Natta catalyst system.

In a preferred single stage polymerisation a bulk polymerisation is used, i.e. a polymerisation in liquid or subcritical propylene. A slurry polymerisation (e.g. in a tank reactor) may, for example, be used. Preferably bulk polymerisation is carried out in a loop reactor. Conventional cocatalysts, supports/carners, electron donors etc. can be used.

Preferably bulk polymerisation is carried out at a temperature of from 40°C to 110°C, preferably between 60°C and 100°C, in particular between 80°C and 90°C. The pressure in the bulk polymerisation is preferably in the range of from 5 to 80 bar, preferably 10 to 70 bar. Adding hydrogen in order to control the molecular weight is preferable. The residence time in the bulk polymerisation reaction may be in the range of from 0.5 to 5 hours, for example 0.5 to 2 hours.

In a preferred multi-stage polymerisation the same Ziegler Natta catalyst system is used in all stages. In a further preferred multi-stage polymerisation a bulk polymerisation (e.g. a slurry polymerisation) in a loop reactor is followed by a gas phase polymerisation in one or more (e.g. two) gas phase reactor(s). Conventional cocatalysts, supports/carriers, electron donors etc. can be used.

In a particularly preferred multi-stage polymerisation process, a prepolymerisation, e.g. producing less than 5 %wt of the total polymer, is employed. Prepolymerisation is preferably carried out by bulk polymerisation (e.g. in a loop reactor). Prepolymerisation is preferably carried out at 0-60 °C.

A loop reactor - gas phase reactor system is described in EP-A-0887379 and WO92/12182, the contents of which are incorporated herein by reference, and is marketed by Borealis A/S, Denmark as a BORSTAR reactor system. The propylene polymer used in the invention is thus preferably formed in a multi stage process comprising a first bulk (e.g. slurry) loop polymerisation followed by gas phase polymerisation in the presence of a Ziegler-Natta catalyst system.

With respect to the above-mentioned preferred bulk (e.g. slurry)-gas phase process, the following general information can be provided with respect to the process conditions.

A temperature of from 40°C to 110°C, preferably between 60°C and 100°C, in particular between 80°C and 90°C is preferably used in the bulk (e.g. slurry) phase. The pressure in the bulk (e.g. slurry) phase is preferably in the range of from 20 to 80 bar, preferably 30 to 60 bar, with the option of adding hydrogen in order to control the molecular weight being available. The reaction product of the bulk (e.g. slurry) polymerization, which preferably is carried out in a loop reactor, is transferred to a subsequent gas phase reactor, wherein the temperature preferably is within the range of from 50°C to 130°C, more preferably 80°C to 100°C. The pressure in the gas phase reactor is preferably in the range of from 5 to 50 bar, more preferably 15 to 35 bar. Adding hydrogen in order to control the molecular weight available is preferable.

The residence time can vary in the reactor zones identified above. The residence time in the bulk (e.g. slurry) reaction, for example in the loop reactor, may be in the range of from 0.5 to 5 hours, for example 0.5 to 2 hours. The residence time in the gas phase reactor may be from 1 to 8 hours.

When the propylene polymer is multimodal the first propylene polymer component of the polymer is preferably produced in a continuously operating loop reactor where propylene and tertiary diene is polymerised in the presence of a Ziegler Natta polymerisation catalyst system and a chain transfer agent such as hydrogen. The reactor liquid is typically propylene or an inert aliphatic hydrocarbon, preferably i-butane, hexane or heptane. The second propylene polymer component can then be formed in a gas phase reactor using the same catalyst. Tertiary diene may optionally be added to the gas phase reactor. Prepolymerisation can be employed as is well known in the art.

Whether a single or multiple stage reactor is used, the properties of the polypropylene produced with the above-outlined process may be adjusted and controlled with the process conditions as known to the skilled person, for example by one or more of the following process parameters: temperature, hydrogen feed, comonomer feed, propylene feed, catalyst, type and amount of external donor, split between two or more components of the polymer.

Ziegler-Natta catalyst systems are used in the manufacture of the propylene polymer of the invention. The nature of the Ziegler-Natta catalyst is described in numerous prior publications, e.g. US 5234879 and WO2004/029112.

Particularly preferred Ziegler-Natta catalyst systems for use in the manufacture of the propylene polymer of the invention are those described in US 5234879 and in WO2004/029112 (e.g. in example 8 of WO2004/029112).

An especially preferred Ziegler Natta catalyst system for use in the manufacture of the propylene polymer of the invention consists essentially of:

a) a solid, particulate catalyst comprising a transition metal (e.g. Ti), preferably bonded to halogen atoms, and a magnesium compound (e.g. $MgCl_2$);
b) a liquid cocatalyst, preferably an aluminium alkyl compound, more preferably an aluminium trialkyl compound (e.g. TEA or TIBA); and
c) a soluble external electron donor, preferably a silane.

<u>Long chain branched Propylene Polymer Properties</u>

The long chain branched propylene polymer of the invention is obtainable from a propylene polymer comprising 1-50 tertiary double bonds per 10,000 carbon atoms as hereinbefore defined. Indeed a highly advantageous feature of the polymer hereinbefore described is that a long chain branched polymer can be produced therefrom. The resulting long chain branched polymers have surprisingly high melt strength and strain hardening behaviour.

Preferred long chain branched propylene polymers of the invention comprise branches of at least 20 carbon atoms, still more preferably at least 100 carbon atoms (e.g. at least 1000 carbon atoms).

As hereinbefore described strain hardening behaviour may be characterised by determining the polymers rheological properties, preferably as defined in the examples. As used herein, the strain hardening at 180 °C and at a certain Hencky strain rate is expressed as:

$$SH_{3.0/2.5} = (\log(\eta^{e}_{3.0}) - \log(\eta^{e}_{2.5})/(\log(3.0) - \log(2.5))$$

where log is Brigg's logarithm, and $\eta^{e}_{3.0}$ and $\eta^{e}_{2.5}$ are the elongation viscosities at 3.0 and 2.5 % strain respectively. The higher the $SH_{3.0/2.5}$ value, the greater the level of strain hardening behavior.

Preferably the long chain branched polymer of the present invention has a strain hardening $SH_{3.0/2.5}$ at 180 °C and at a Hencky strain rate of 0.3 $s^{-1}$ of at least 1.5, more preferably at least 1.8, e.g. 1.5 to 3.0

Preferably the long chain branched polymer of the present invention has a strain hardening $SH_{3.0/2.5}$ at 180 °C and at a Hencky strain rate of 1.0 $s^{-1}$ of at least 1.4, more preferably at least 1.5, e.g. 1.4 to 2.0

Preferably the long chain branched polymer of the present invention has a strain hardening $SH_{3.0/2.5}$ at 180 °C and at a Hencky strain rate of 10.0 $s^{-1}$ of at least 0.5, more preferably at least 0.7, e.g. 0.5 to 1.5.

Polymers having high strain hardening behaviour are advantageous for a number of reasons. For example, the melts of such polymers have a very low tendency to rupture when drawn or to collapse when extruded. These effects are particularly advantageous in the manufacture of fibres, foams and pipes.

Particularly preferred long chain branched polymers of the present invention are essentially free of gels. Especially preferred long chain branched polymers are gel-free as hereinbefore defined. Long chain branched polymers that are completely soluble in decalin at 135 °C are especially preferred.

Preparation of Long chain branched Propylene Polymer

The long chain branched propylene polymer may be made from a propylene polymer comprising 1-50 tertiary double bonds per 10,000 carbon atoms as hereinbefore defined by post reactor treatment. The tertiary double bonds may be reacted by any conventional technique known to the skilled man, e.g. by use of a free radical initiator, use of sulfur or of a sulfur compound or use of radiation, e.g. gamma radiation. Use of a free radical initiator, preferably a peroxide, is preferred.

In a preferred process for making long chain branched propylene polymer of the present invention propylene polymer comprising 1-50 tertiary double bonds as hereinbefore described is mixed with a peroxide (e.g. an organic peroxide), preferably at a temperature of 30-100 °C. The propylene polymer treated may be in any form. For example the polymer may be in the form of a powder, granule or pellet. Preferably, however, the polymer is in the form of pellets or powder.

The peroxide used in the treatment is preferably decomposable at elevated temperatures. Preferably the peroxide is decomposable at a temperature greater than 100 °C. Preferred peroxides are acyl peroxides, alkyl peroxides, hydroperoxides, peresters and/or peroxycarbonates.

Examples of suitable organic peroxides are:

- Acyl peroxides, such as benzoyl peroxide, 4 chlorobenzoyl peroxide, 3 methoxybenzoyl peroxide and/or methylbenzoyl peroxide;
- Alkyl peroxides such as allyl tert butyl peroxide, 2,2 bis(tert-butylperoxybutane), 1,1 bis(tert-butylperoxy)-3,3,5 trimethylcyclohexane, n butyl 4,4 bis(tert-butylperoxy)valerate, diisopropylaminomethyl tert-amyl peroxide, dimethylaminomethyl tert-amyl peroxide, diethylaminomethyl tert-butyl peroxide, dimethylaminomethyl tert-butyl peroxide, 1,1 di(tert-amylperoxy)cyclohexane, tert-amyl peroxide, tert-butyl cumyl peroxide, tert-butyl peroxide, and/or 1 hydroxybutyl n butyl peroxide;
- Peresters and peroxycarbonates, such as butyl peracetate, cumyl peracetate, cumyl perpropionate, cyclohexyl peracetate, di tert-butyl peradipate, di tert-butyl perazelate, di tert-butyl perglutarate, di tert-butyl perphthalate, di tert-butyl persebacate, 4 nitrocumyl perpropionate, 1 phenylethyl perbenzoate, phenylethyl nitroperbenzoate, tert-butyl bicyclo[2.2.1]heptanepercarboxylate, tert-butyl 4 carbomethoxyperbutyrate, tert-butyl cyclobutanepercarboxylate, tert-butyl cyclohexylperoxycarboxylate, tert-butyl cyclopentylpercarboxylate, tert-butyl cyclopropanepercarboxylate, tert-butyl dimethylpercinnamate, tert-butyl 2 (2,2 diphenylvinyl)perbenzoate, tert-butyl 4 methoxyperbenzoate, tert-butyl perbenzoate, tert-butyl carboxycyclohexane, tert-butyl pernaphthoate, tert-butylperoxy isopropyl carbonate, tert-butyl pertoluate, tert-butyl 1 phenylcyclopropylpercarboxylate, tert-butyl 2 propylperpenten-2 oate, tert-butyl 1 methylcyclopropylpercarboxylate, tert-butyl 4 nitrophenylperacetate, tert-butyl nitrophenylperoxycarbamate, tert-butyl N succinimidopercarboxylate, tert-butyl percrotonate, tert-butylpermaleic acid, tert-butyl permethacrylate, tert-butyl peroctoate, tert-butylperoxy isopropyl carbonate, tert-butyl perisobutyrate, tert-butyl peracrylate and/or tert-butyl perpropionate; and mixtures of these peroxides.

The peroxides may be applied in pure form or in a solution of an inert organic solvent. Preferably, the amount

of peroxide is 0.05 to 3 wt%, based on the weight of the polymer.

In the process for making long chain branched propylene polymer of the present invention a chain extender may additionally be used, e.g. to increase the level of long chain branching. Any conventional chain extender may be used.

In a preferred process for making long chain branched propylene polymers of the invention the particulate propylene polymer comprising tertiary double bonds, the absorbed peroxide and optionally a chain extended is heated and molten at a temperature of 200-250 °C, e.g. at a temperature of 210°C, preferably in an atmosphere comprising inert gas. Under these conditions the peroxide decomposes to produce free radicals and reactions between these free radicals, the polymer chains and, if present, chain extenders occur to form long chain branches.

The melt is then preferably heated to 220-260 °C. This removes unreacted monomers and decomposition products.

The heating and melting steps are preferably performed in continuous kneaders or extruders, preferably in twin-screw extruders.

Preferably the resulting molten propylene polymer having long chain branches is then cooled and pelletised.

Propylene Polymer Composition

The propylene polymers (e.g. the long chain branched propylene polymer) of the present invention may be mixed with one or more other polymers and/or any conventional additives to form a polymer composition. Representative examples of suitable additives include nucleating agents, heat and light stabilisers, colourants, antistatic agents, antioxidants, carbon black, pigments and flame retardants. A filler (e.g. talc) may also be present.

The long chain branched propylene polymer of the present invention may also be present in a heterophasic propylene polymer. Heterophasic propylene polymers preferably comprise a matrix phase and a dispersed phase, e.g. an elastomer. In preferred heterophasic propylene polymers the propylene polymers of the present invention comprise the matrix of the heterophasic polymer. The matrix may additionally comprise one or more propylene polymers.

The elastomer present in the heterophasic polymer is preferably made from at least two olefins, e.g. ethylene and a $C_{3-20}$ $\alpha$-olefin. Representative examples of comonomers include propylene, but-1-ene and hex-1-ene. Ethylene-propylene elastomers are particularly preferred. The amount of each monomer (e.g. ethylene, propylene etc) present in the elastomer is preferably 20-60 %wt, preferably 25-50 %wt, e.g. 30-45 %wt.

The molecular weight of elastomers may be measured indirectly by measurement of the intrinsic viscosity of the xylene soluble amorphous fraction (AM). The elastomer preferably has an intrinsic viscosity (IV of AM) measured in accordance with the method described hereinafter of 1-6 dL/g, more preferably 1.5-5.5 dL/g, e.g. 2.0-5.0 dL/g.

The dispersed phase (e.g. elastomer) preferably comprises 5 to 50 %wt, preferably 10 to 35 %wt, more preferably 20 to 30 %wt of the heterophasic polypropylene.

As with the matrix polymer, the dispersed phase may be produced by any conventional techniques. Preferably, however, the elastomer is synthesised using a supported catalyst system, e.g. a supported Ziegler-Natta catalyst system.

The dispersed phase (e.g. elastomer) may be blended with the matrix polymer. More preferably, however, the dispersed phase (e.g. elastomer) is produced by performing a further polymerisation in the presence of particles of matrix polymer, e.g. as one or more further polymerisation stages of a multistage polymerisation as hereinbefore described.

Preferably the heterophasic propylene polymer is produced in a multi-stage polymerisation using two or more polymerisation reactors, more preferably using loop and gas phase reactors. In such a procedure, the catalyst system used may be varied between stages but is preferably the same for all stages. Especially preferably a prepolymerised heterogeneous (i.e. supported) catalyst is used.

Once polymerisation is complete, the heterophasic propylene polymer preferably undergoes post reactor treatment (e.g. with a free radical initiator) as hereinbefore described.

Applications

The long chain branched propylene polymers of the invention and compositions comprising said polymers may be advantageously used in a wide variety of applications. Examples include moulding and extrusion. Articles that may comprise the long chain branched propylene polymers of the invention or compositions comprising said polymers include foams, pipes, films, fibres and moulded articles. In foams the long chain branched propylene polymers provide walls with stability during the expansion stage of production. In pipes the long chain branched propylene polymer provides resistance to sagging in the period before solidification. In films the long chain branched propylene polymer provides good bubble stability during film blowing.

The long chain branched propylene polymers of the invention are particularly useful in extrusion techniques, e.g. extrusion coating, foam extrusion, vacuum forming and pipe extrusion, since they provide improved melt strength combined with improved drawability of the polymer melt. Articles that may be made by extrusion include films, foamed films, sheets and pipes.

The long chain branched propylene polymers may also be used in moulding, e.g. blow moulding, stretch blow moulding (SBM), extrusion blow moulding and injection moulding. The long chain branched propylene polymers are especially useful in blow moulding wherein the higher melt strength of these polymers is highly advantageous in providing walls of constant thickness and without holes. Articles that may be made by blow moulding include films, bottles and containers.

The long chain branched propylene polymers may additionally be used to prepare fibres.

The invention will now be further illustrated by the following non-limiting examples and Figures wherein Figure 1 shows the strain hardening behaviour of copolymers of the present invention both prior to, and after, peroxide treatment.

EXAMPLES

Analytical Tests

Values quoted in the description and examples are measured according to the following tests:

• The melt flow rate (MFR) is determined according to ISO 1133 and is indicated in g/10 min. The MFR is an indication of the melt viscosity of the polymer. The MFR is determined at 230 °C for PP. The load under which the melt flow rate is determined is usually indicated as a subscript, for instance $MFR_2$ is measured under 2.16 kg load, $MFR_5$ is measured under 5 kg load or $MFR_{21}$ is measured under 21.6 kg load.

• Density was measured according to ISO 1183

• The weight average molecular weight Mw and the molecular weight distribution (MWD = Mw/Mn wherein Mn is the number average molecular weight and Mw is the weight average molecular weight) is measured by a method based on ISO 16014-4:2003. A Waters 150CV plus instrument, equipped with refractive index detector and online viscosimeter was used with 3 x HT6E styragel columns from Waters (styrene-divinylbenzene) and 1,2,4-trichlorobenzene (TCB, stabilized with 250 mg/L 2,6-Di tert butyl-4-methyl-phenol) as solvent at 140 °C and at a constant flow rate of 1 mL/min. 500 μL of sample solution were injected per analysis. The column set was calibrated using universal calibration (according to ISO 16014-2:2003) with 10 narrow MWD polystyrene (PS) standards in the range of 1.05 kg/mol to 11 600 kg/mol. Mark Houwink constants were used for polystyrene and polyethylene (K: 19 $x10^{-3}$ dL/g and a: 0.655 for PS, and K: 19 $x10^{-3}$ dL/g and a: 0.725 for PP). All samples were prepared by dissolving 0.5 - 3.5 mg of polymer in 4 mL (at 140 °C) of stabilized TCB (same as mobile phase) and keeping for 2 hours at 140 °C and for another 2 hours at 160 °C with occasional shaking prior sampling in into the GPC instrument.

• Comonomer content can be determined in a known manner based on Fourier transform infrared spectroscopy (FTIR) determination calibrated with $^{13}C$ - NMR.

• Melting temperature ($T_m$), crystallization temperature ($T_c$) and degree of crystallinity ($X_c$) were measured according to ISO11357. The samples were cut from compression molded, 0.2 mm films. The measurements were performed at the following conditions:

| **Stage** | **Temperature Program** | **Heating/Cooling Rate** *°C/min* | **Time** *Min* |
|---|---|---|---|
| 1st heating | 20-225 °C | 10 | |
| Isothermal | 225 °C | | 5 |
| Cooling | 225-20 °C | -10 | |
| Isothermal | 20 | | 1 |
| 2nd heating | 20-225 °C | 10 | |

The $T_m$ and $X_c$ were determined from the second heating. The degree of crystallinity (Xc) was calculated using a melting enthalpy of 100 % PP equal to 209 J/g.

• The amount of double bonds was determined by $^1H$ NMR according to the following procedure:

Sample preparation for NMR analysis

A 10 mm NMR tube was filled with approximately 1 mL of ortho-dichlorobenzene (ODCB) and subsequently approximately 50 -80 mg of polymer was added. Nitrogen gas was passed through the sample before melt sealing the NMR tube which was set in an oven at ca. 130 °C for about 4 hours and shaken (turning the NMR tube up/down). The temperature was raised to 150 °C for a few hours and subsequently cooled to 130 °C and kept at this temperature for 5-7 days (the sample was shaken at intervals of about 12 hours).

$^1$H-NMR

The measurement was performed at 127 °C with an acquisition time of 2s and a repetition time of 30 s. This repetition time was sufficient to ensure quantitative data sampling (measurements performed with a repetition time of 60 s resulted in the same quantitative results). The number of scans was set to 16 or 32, depending on the concentration of diene used to make the sample. Only the olefinic region of the spectrum (4 - 6.5 ppm) was analyzed. During post processing an exponential multiplication of the signal (FID) by 2 Hz was performed before Fourier transformation of the signal (64 K data points).

The number of tertiary double bonds $RCH=CR_2$ was used to calculate the incorporation (wt% and mol%) of MOD and MPD.

- The morphology of the copolymers was observed by optical microscopy after melt pressing 2 g pellets to a disc of 12 cm diameter (H = homogenous, I = Inhomogeneous)

- The elongational rheological properties were tested on a standard Physica instrument in combination with SER-Extensional Rheology System by the method described in The Society of Rheology, 2005, 585-606. The measurements were performed at 180 °C and at different Hencky strain rates. The strain hardening at a certain Hencky strain rate was expressed as:

  $SH_{3.0/2.5} = (\log(\eta^e_{3.0}) - \log(\eta^e_{2.5})/(\log(3.0) - \log(2.5))$ where log is Brigg's logarithm, and $\eta^e_{3.0}$ and $\eta^e_{2.5}$ are the elongation viscosities at 3.0 and 2.5 % strain respectively.

Experimental setup for strain hardening tests

A Paar Physica MCR300, equipped with a TC30 temperature control unit, an oven CTT600 (convection and radiation heating), a SERVP01-025 extensional device with temperature sensor and a software RHEOPLUS/32 v2.66 was used.

Sample Preparation

Stabilized pellets were compression moulded at 220°C (gel time 3 min, pressure time 3 min, total moulding time 3+3= 6 min) in a mould at a pressure sufficient to avoid bubbles in the specimen, cooled to room temperature and cut to strips (10 mm wide, 18 mm long, 0.7 mm thick).

SER Device Validation

To ensure that the friction of the device was less than a threshold of $5x10^{-3}$ mNm (Milli-Newtonmeter) which is required for precise and correct measurements, the following procedure was performed prior to each measurement:

- The device was set to test temperature (180°C) for a minimum of 30 minutes without sample in presence of the clamps
- A standard test with 0.3 $s^{-1}$ was performed with the device on test temperature (180°C)
- The torque (measured in mNm) was recorded and plotted against time
- The torque must not exceed a value of $5x10^{-3}$ mNm to make sure that the friction of the device is in an acceptably low range

Conducting the experiment

The device was heated for 20 min to the test temperature (180 °C measured with the thermocouple attached to the SER device) with clamps but without sample. Subsequently, the sample (0.7x10x18mm) was clamped into the hot device. The sample was allowed to melt for 2 minutes +/- 20 seconds before the experiment is started. During stretching (under inert atmosphere (nitrogen)) at constant Hencky strain rate, the torque was recorded as a function of time at isothermal conditions (measured and controlled with the thermocouple attached to the SER device). After stretching, the device was opened and the stretched film (which is wound on the drums) was inspected to confirm that homogenous extension occurred. It can be judged visually from the shape of the stretched film on the drums if the sample stretching has occurred homogenously. The film must be wound up symmetrically on both drums, and also symmetrically in the upper and lower half of the specimen. If symmetrical stretching is confirmed, the transient elongational viscosity can be calculated from the recorded torque as outlined above.

- Xylene solubles and Amorphous phase
  The xylene soluble fraction (XS) as defined and described in the present invention is determined as follows: 2.0 g of the polymer are dissolved in 250 mm p-xylene at 135 °C under agitation. After 30 minutes, the solution was allowed to cool for 15 minutes at ambient temperature and then allowed to settle for 30 minutes at 25 ± 0.5 °C. The solution was filtered with filter paper into two 100 mm flasks. The solution from the first 100 mm vessel was evaporated in nitrogen flow and the residue dried under vacuum at 90 °C until constant weight is reached. The xylene soluble fraction (percent) can then be determined as follows:

$$XS\% = (100 \text{ x } m1 \text{ X } v0)/(m0 \text{ x } v1),$$

wherein m0 designates the initial polymer amount (grams), m1 defines the weight of residue (grams), v0 defines the initial volume (milliliter) and v1 defines the volume of the analysed sample (milliliter). The solution from the second 100 ml flask was treated with 200 ml of acetone under vigorous stirring. The precipitate was filtered and dried in a vacuum oven at 90 °C. This solution can be employed in order to determine the amorphous part of the polymer (AM) using the following equation:

$$AM\% = (100 \text{ x } m1 \text{ X } v0)/(m0 \text{ x } v1)$$

wherein m0 designates the initial polymer amount (grams), m1 defines the weight of residue (grams), v0 defines the initial volume (milliliter) and v1 defines the volume of the analysed sample (milliliter). The disperse phase of the rubber is taken to be equal to the amount of amorphous phase in the heterophasic polymer.

- Intrinsic viscosity (IV)
  The intrinsic viscosity (IV) value increases with the molecular weight of a polymer. The IV values e.g. of the amorphous phase were measured according to ISO 1628.

Experimental

Catalysts

Catalyst A - This catalyst is made according to US5234879 and is commercially available from Grace under the tradename Polytrack
Catalyst B - This catalyst was made according to example 8 of WO2004/029112 but diethyl aluminium chloride (DEAC) was used instead of triethyl aluminium (TEA)

Polymerisation of propylene was conducted in a 2 1 bench scale reactor initially filled with $N_2$ at 1 bar gauge. Catalyst, triethylaluminum and electron donor (dicyclopentyldiemthoxysilane) and a minor amount of hydrogen were first added into the reactor. The ratio triethylaluminum/Ti was 250 mol/mol and Al/donor 10 mol/mol. 400 ml of liquid isobutane and 100 ml of liquid propylene were then fed into the reactor and prepolymerisation was carried out at 20 °C for 6 minutes. The polyene then was added together with a further 200 ml isobutane. Stirring was started and the temperature was increased to setpoint temperature, 80 °C. The total pressure was maintained throughout the polymerisation period by additional propylene. At the end of the polymerisation period, the reactor was vented. The polymer was dried in an oven, assisted by a flow of warm nitrogen, and the samples were analysed. The results are shown in Table 1 below.

In order to achieve long chain branching a number of the polymers were dry mixed with 0.3 wt.% free radical initiator (tert-Butylperoxy isopropyl carbonate) and further processed in an internal mixer. The mixing conditions are as follows:
temperature 200 °C, rotor speed 80 rpm, mixing time 3 min.

To characterize the extent of strain hardening of the copolymers, the rheological properties of the treated and untreated polymers were tested on a standard Physica instrument in combination with a SER- Extensional Rheology System. The measurements were performed at 180 °C and at different Hencky strain rates. The results are shown in Tables 1 and 2.

Table 2

| | | | $\eta^{e}_{3.0/2.5}$ at Hencky strain rate | | | | | |
|---|---|---|---|---|---|---|---|---|
| | Diene content | | 0.3 $s^{-1}$ | | 1.0 $s^{-1}$ | | 10.0 $s^{-1}$ | |
| | $RCH=CR_2$ bonds/ 10000 C | mol % | Untreated | Treated | Untreated | Treated | Untreated | Treated |
| 1 | 19.14 | 0.38 | 0.354 | 2.692 | 0.228 | 1.851 | 0.187 | 1.476 |
| 2 | 5.84 | 0.12 | 0.674 | 1.581 | 0.209 | 1.428 | NA | 0.58 |
| 3 | 0.64 | 0.01 | NA | 1.842 | 0.404 | 1.486 | 0.062 | 0.699 |
| 4 | 14.4 | 0.29 | 1.383 | NA | 0.776 | 1.4 | 0.407 | 1.248 |
| C5* | none | 0 | - | 2.56 | - | 2.755 | - | 2.509 |
| *C5 is a commercially available polypropylene which is modified post-polymerisation by treatment with a chain extender and peroxide. | | | | | | | | |

It is clear from Table 2 that an increase in strain hardening occurs after treatment with a free radical initiator. The increase is more pronounced with increasing Hencky strain rates and diene content. It can also be seen from Table 2 that post reactor treated PP/diene copolymer of the present invention exhibits the same order of magnitude of strain hardening especially at low strain rates as C5, a commercially available polypropylene that is modified post-polymerisation prior to peroxide treatment. The strain hardening behavior of the polymers of the invention is also shown in Figure 1.

It can be concluded that polypropylene with strain hardening behavior can be prepared by copolymerization of a small amount of dienes and subsequent treatment with a free radical initiator.

TABLE 1- All values are measured on polymer prior to peroxide treatment * No. of RCH=CR2 bonds (5.03) #1,7-octadiene

| | | 1 | 2 | 3 | 4 | 5 | 6 | C 1 | C2 | C3 | C4 |
|---|---|---|---|---|---|---|---|---|---|---|---|
| Catalyst | | A | A | A | B | A | A | A | A | C | C |
| Amount of Catalyst | g | 0.110 | 0.110 | 0.100 | 0.090 | 0.090 | 0.120 | 0.115 | 0.205 | 0.090 | 0.083 |
| $H_2$ | bar | 0.05 | 0.05 | 0.06 | 0.06 | 0.05 | 0.05 | 0.06 | 0.06 | 0.10 | 0.05 |
| Isobutane | ml | 600 | 600 | 600 | 600 | 600 | 600 | 600 | 600 | 600 | 600 |
| Pressure | bar | 18.5 | 18.5 | 18.5 | 19.0 | 18.0 | 17.7 | 17.7 | 18.2 | 17.5 | 18.9 |
| Propylene | ml | 100 | 100 | 100 | 150 | 100 | 100 | 100 | 100 | 100 | 100 |
| Polyene | type | MOD | MOD | MOD | MOD | MPD | MPD | none | 1,7-OD# | 1,3-pentadiene | 1-Hexyne |
| Polyene | g | 15.00 | 4.10 | 0.49 | 13.00 | 2.05 | 1.50 | 0.00 | 14.90 | 1.90 | 0.63 |
| Polymerisation time | min | 150 | 200 | 170 | 240 | 110 | 200 | 150 | 240 | 60 | 60 |
| MFR | g/10 min | 0.95 | 0.66 | 1.30 | 8.80 | 1.80 | 1.40 | 3.70 | 0.19 | 15.00 | 6.80 |
| Melting Temperature | °C | 157 | 162 | 165 | 158 | 164 | 164 | 164 | | | |
| Crystallisation Temperature | °C | 123 | 127 | 126 | 126 | 122 | 125 | 123 | | | |
| Activity | g/(g,h,molfr) | 9 803 | 7 500 | 8750 | 4474 | 12862 | 6788 | 8418 | 2821 | 4628 | 699 |
| Microscopy structure | | H | H | | | | | H | I | | |
| No of RCH=CR2 bonds (5.23) | /10 000 C | 19.14 | 5.84 | 0.64 | 14.44 | 1.90* | | | | | |
| No. of RCH=CH2 bonds (5.00) | /10 000 C | | | | | | | | 6.34 | | |
| No. of R2CH=CH2 bonds (4.75) | /10 000 C | 0.86 | 2.30 | 1.06 | 0.87 | 1.10 | | 1.12 | | | |
| Total double bonds by NMR | /10 000 C | 20.00 | 8.14 | 1.70 | 15.31 | | | 1.12 | | | |
| Diene content | wt % | 1.53 | 0.46 | 0.05 | 1.15 | 0.10 | | 0 | | | |
| Diene content | mol% | 0.382 | 0.116 | 0.013 | 0.288 | 0.038 | | 0 | | | |
| Elongational measuments before treatment | | | | | | | | | | | |
| $SH_{3.0/2.5}$ at 0.3 $s^{-1}$ | | 0.354 | 0.674 | n.a. | 1.383 | 0.932 | | 0.709 | - | | |
| $SH_{3.0/2.5}$ at 1 $s^{-1}$ | | 0.228 | 0.209 | 0.404 | 0.776 | 0.738 | | 0.789 | - | | |
| $SH_{3.0/2.5}$ at 10 $s^{-1}$ | | 0.187 | n.a. | 0.062 | 0.407 | 0.385 | | 0.155 | 0.775 | | |

**Claims**

1. A propylene polymer comprising 1-50 tertiary double bonds per 10,000 carbon atoms of the main chain of said polymer, wherein said polymer is obtained using a Ziegler Natta catalyst.

2. A propylene polymer as claimed in claim 1 comprising 1-25 tertiary double bonds per 10,000 carbon atoms.

3. A propylene polymer as claimed in claim 1 or claim 2 wherein said tertiary double bonds each comprise a unit derived from a tertiary diene.

4. A propylene polymer as claimed in claim 3 comprising less than 0.5 mol% of a unit derived from a tertiary diene.

5. A propylene polymer as claimed in claim 3 or claim 4 wherein said tertiary diene is not a 1,4-diene.

6. A propylene polymer as claimed in any one of claims 3 to 5 wherein said tertiary diene is of formula I:

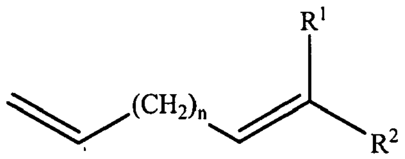

I

wherein n is an integer from 0 to 20, preferably 0 to 4 (e.g. 0 or 3); and
$R^1$ and $R^2$ are each independently a $C_{1-6}$ alkyl group.

7. A propylene polymer as claimed in claim 6 selected from 7-methyl-1,6-octadiene and 4-methyl-1,3-pentadiene.

8. A propylene polymer as claimed in any preceding claim comprising at least 80 mol % units derived from propylene.

9. A propylene polymer as claimed in any preceding claim comprising less than 0.5 mol% units derived from ethylene.

10. A propylene polymer as claimed in any preceding claim having a melting point of greater than 150 °C, preferably greater than 155 °C.

11. A propylene polymer as claimed in any preceding claim having a $MFR_2$ of less than 2.

12. A propylene polymer as claimed in any preceding claim which is homogeneous.

13. A process for preparing a propylene polymer as claimed in any one of claims 1-12 comprising copolymerising propylene and a tertiary diene using a Ziegler Natta catalyst.

14. A process as claimed in claim 13 wherein said tertiary diene is present at the start of the polymerisation.

15. A composition comprising a propylene polymer as claimed in any one of claims 1 to 12.

16. Use of a propylene polymer as claimed in any one of claims 1 to 12 in the manufacture of a long chain branched propylene polymer.

17. A long chain branched propylene polymer obtainable from a propylene polymer as claimed in any one of claims 1 to 12 by post reactor treatment.

18. A long chain branched propylene polymer as claimed in claim 17 obtainable from a propylene polymer as claimed in any one of claims 1 to 12 by post reactor treatment with a free radical initiator.

19. A long chain branched propylene polymer as claimed in claim 17 or claim 18 which has a strain hardening $SH_{3.0/2.5}$ at 180 °C and at a Hencky strain rate of 0.3 $s^{-1}$ of at least 1.5.

**20.** A long chain branched propylene polymer as claimed in any one of claims 17 to 19 which has a strain hardening $SH_{3.0/2.5}$ at 180 °C and at a Hencky strain rate of 1.0 $s^{-1}$ of at least 1.4.

**21.** A long chain branched propylene polymer as claimed in any one of claims 17 to 20 which has a strain hardening $SH_{3.0/2.5}$ at 180 °C and at a Hencky strain rate of 10.0 $s^{-1}$ of at least 0.5.

**22.** A process for preparing a long chain branched propylene polymer as claimed in any one of claims 17 to 21 comprising:

(i) copolymerising propylene and a tertiary diene using a Ziegler Natta catalyst to produce a propylene polymer comprising 1-50 tertiary double bonds per 10,000 carbon atoms of the main chain of said polymer; and
(ii) treating said copolymer (e.g. with a free radical initiator) to introduce long chain branching.

**23.** A composition comprising a long chain branched propylene polymer as claimed in any one of claims 17 to 21.

**24.** Use of a long chain branched propylene polymer as claimed in any one of claims 17 to 21 in moulding or extrusion.

**25.** A process for preparing an article comprising moulding or extruding a long chain branched propylene polymer as claimed in any one of claims 16 to 20.

**26.** A moulded or extruded article comprising a long chain branched propylene polymer as claimed in any one of claims 17 to 21.

**NON-PEROXIDE TREATED (Table 1)**

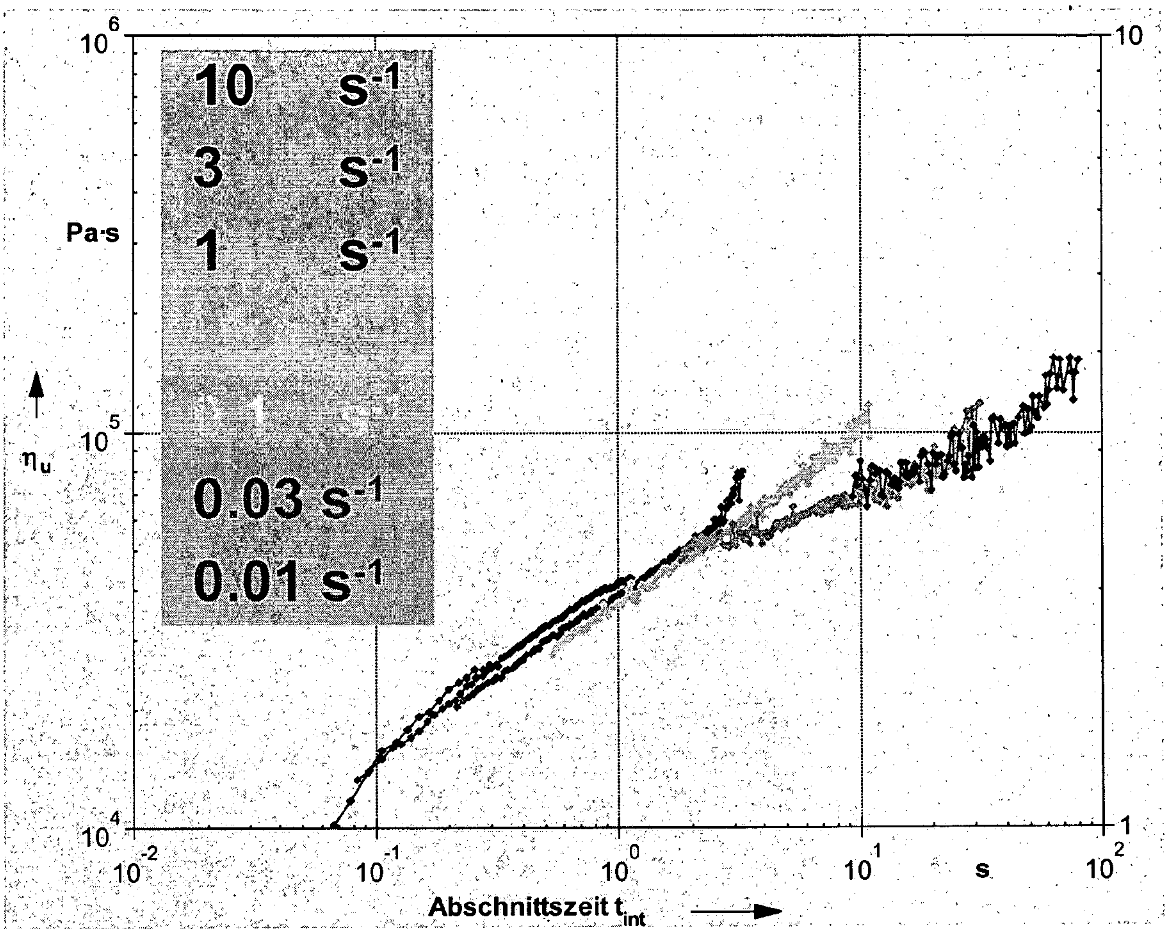


Comparative example C1

FIG. 1

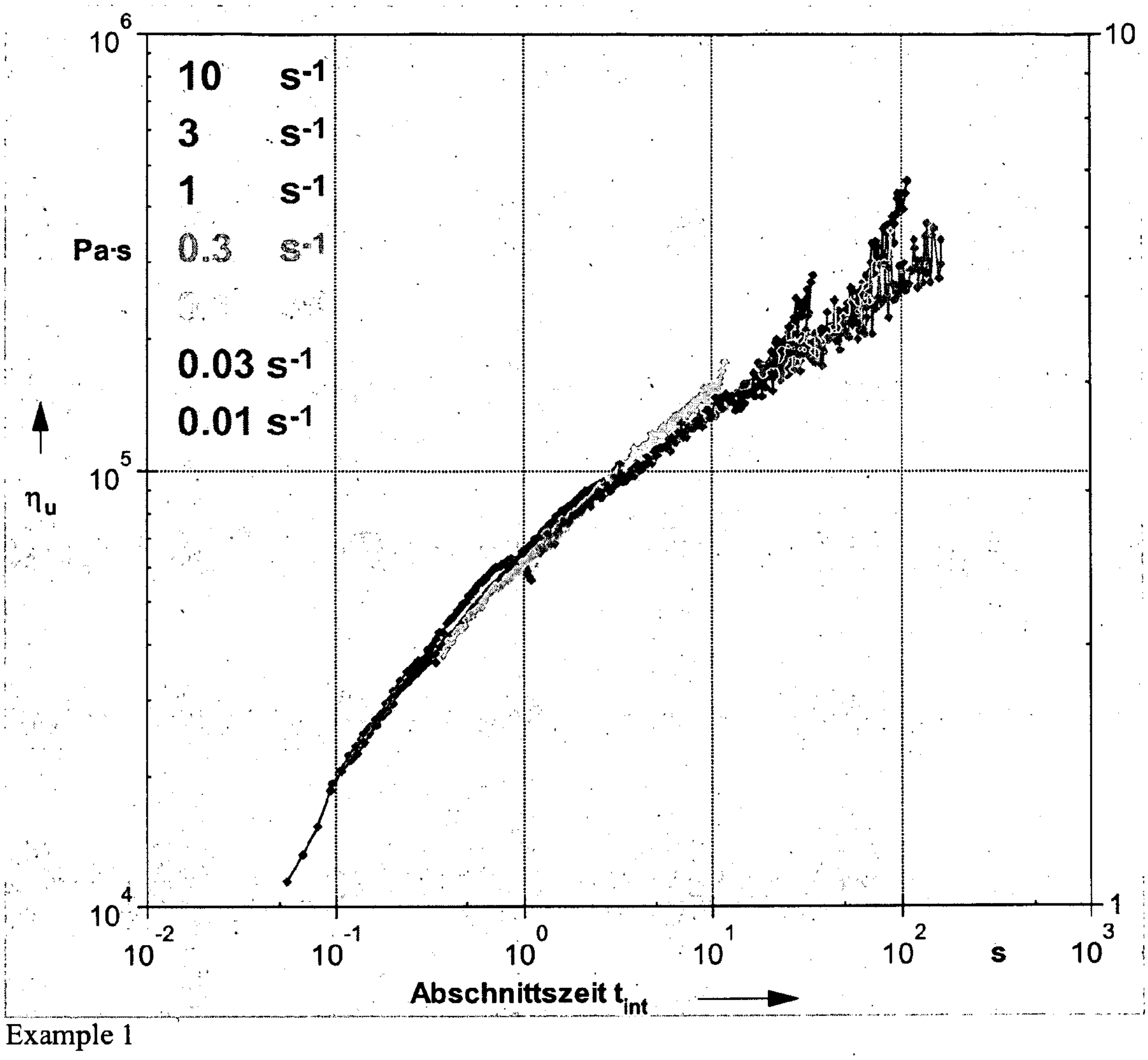


Example 1

FIG. 1 (CONTINUED)

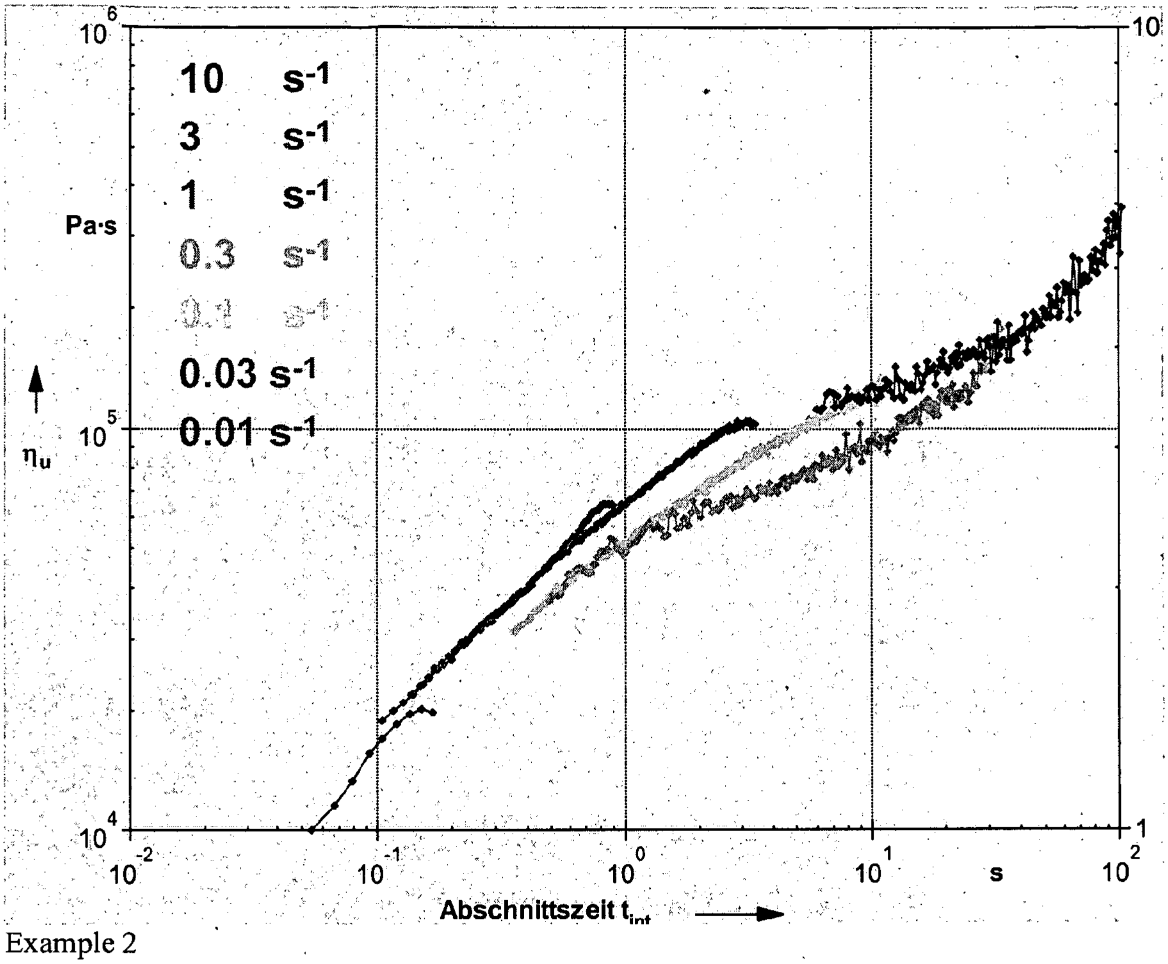


Example 2

FIG. 1 (CONTINUED)

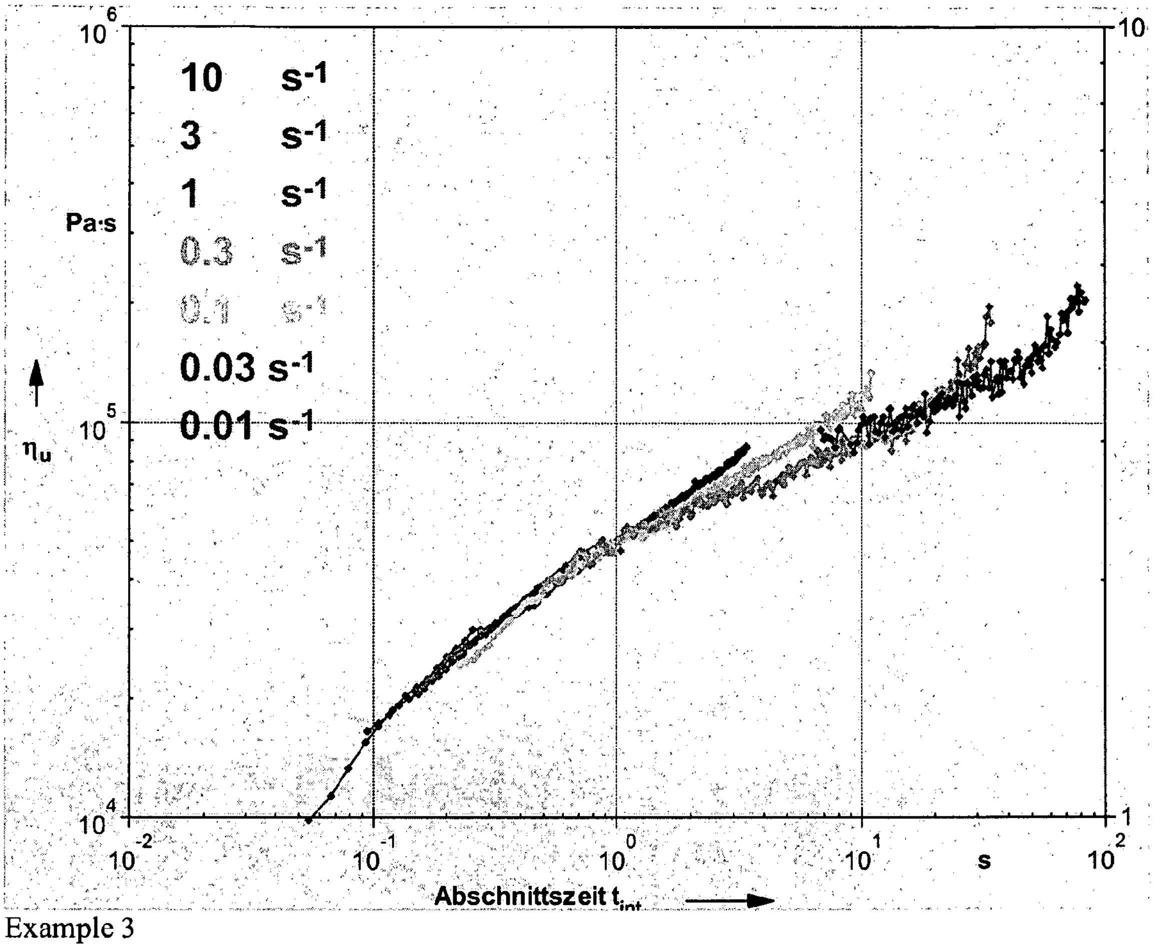


Example 3

FIG. 1 (CONTINUED)

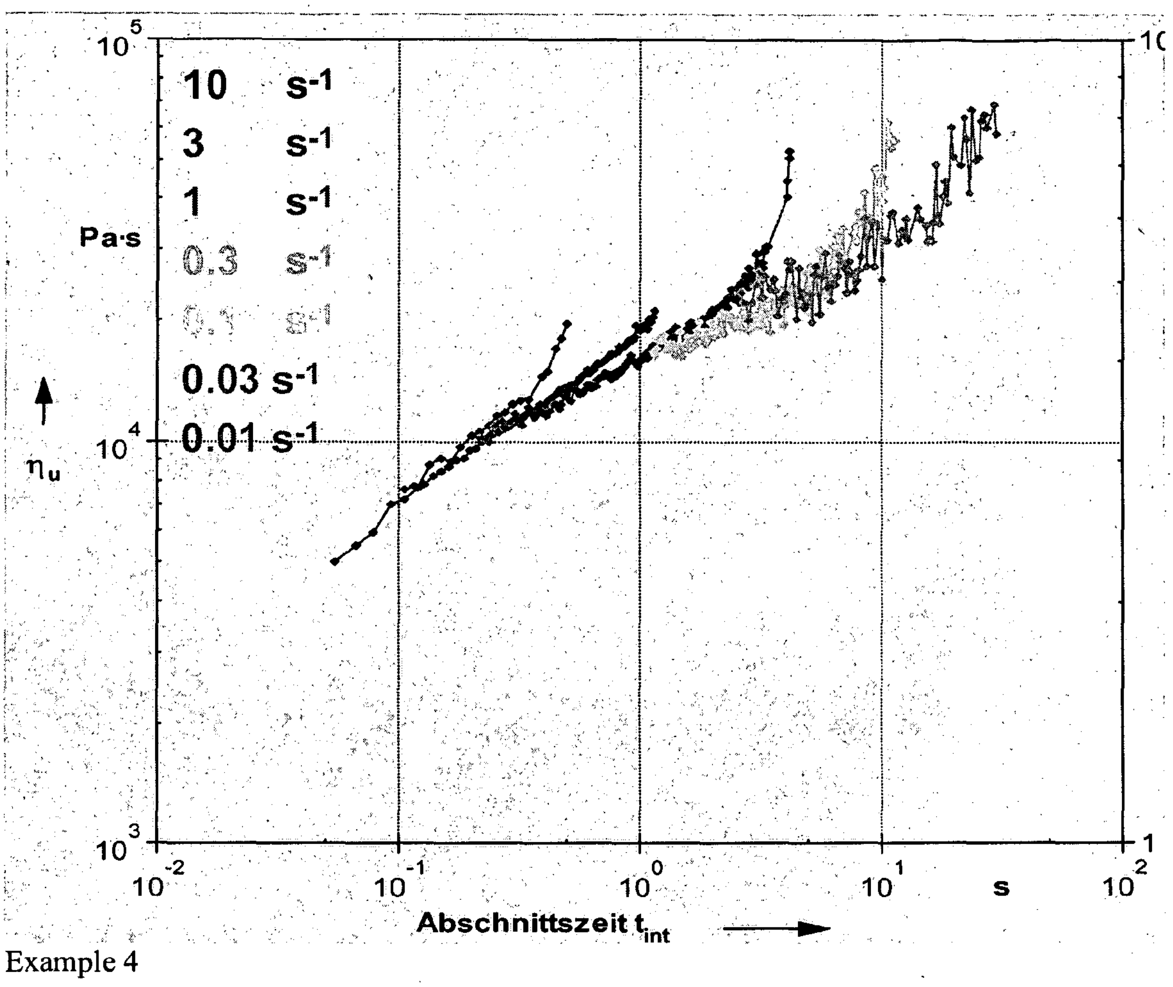


Example 4

FIG. 1 (CONTINUED)

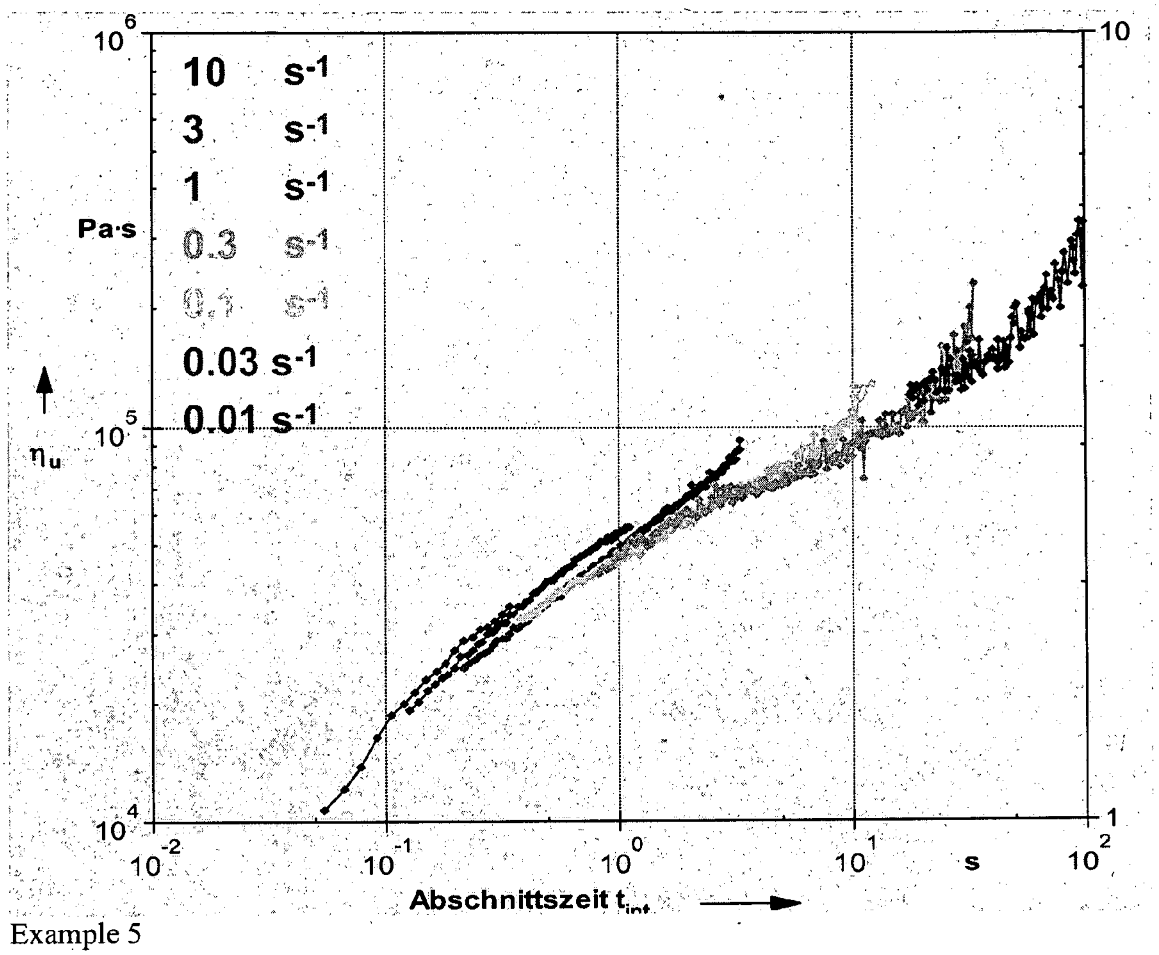


Example 5

FIG. 1 (CONTINUED)

**PEROXIDE TREATED (Table 2)**

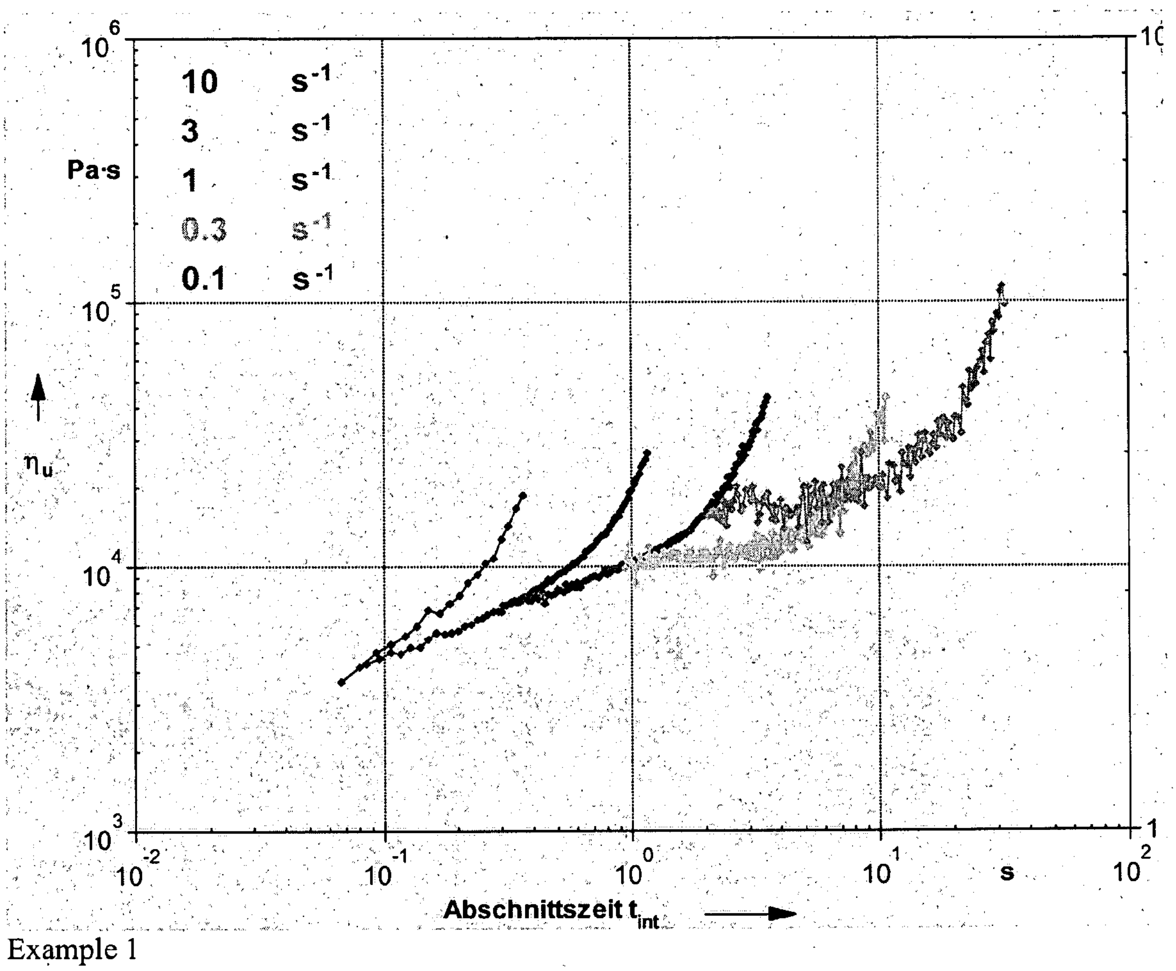


Example 1

FIG. 1 (CONTINUED)

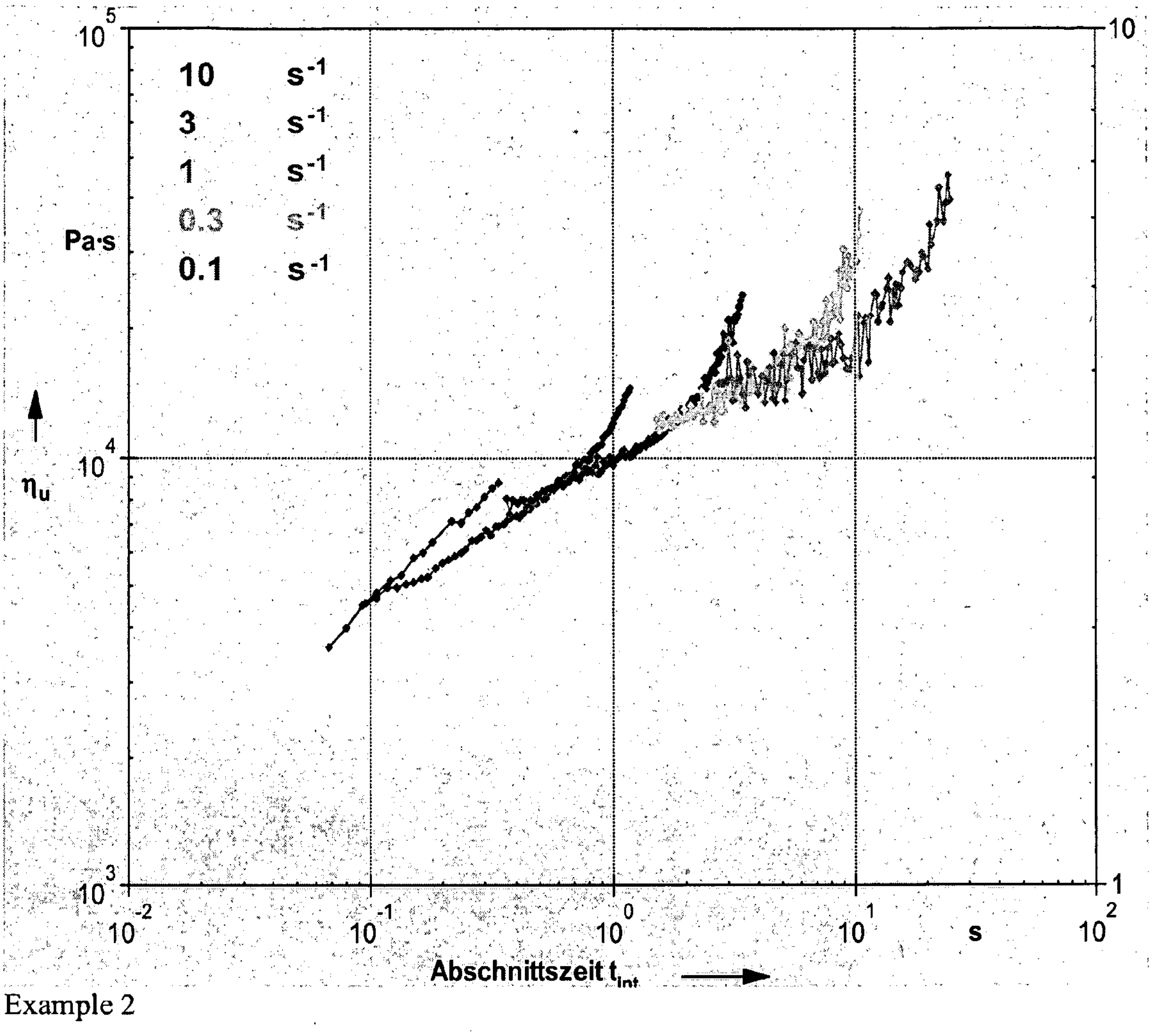


Example 2

FIG. 1 (CONTINUED)

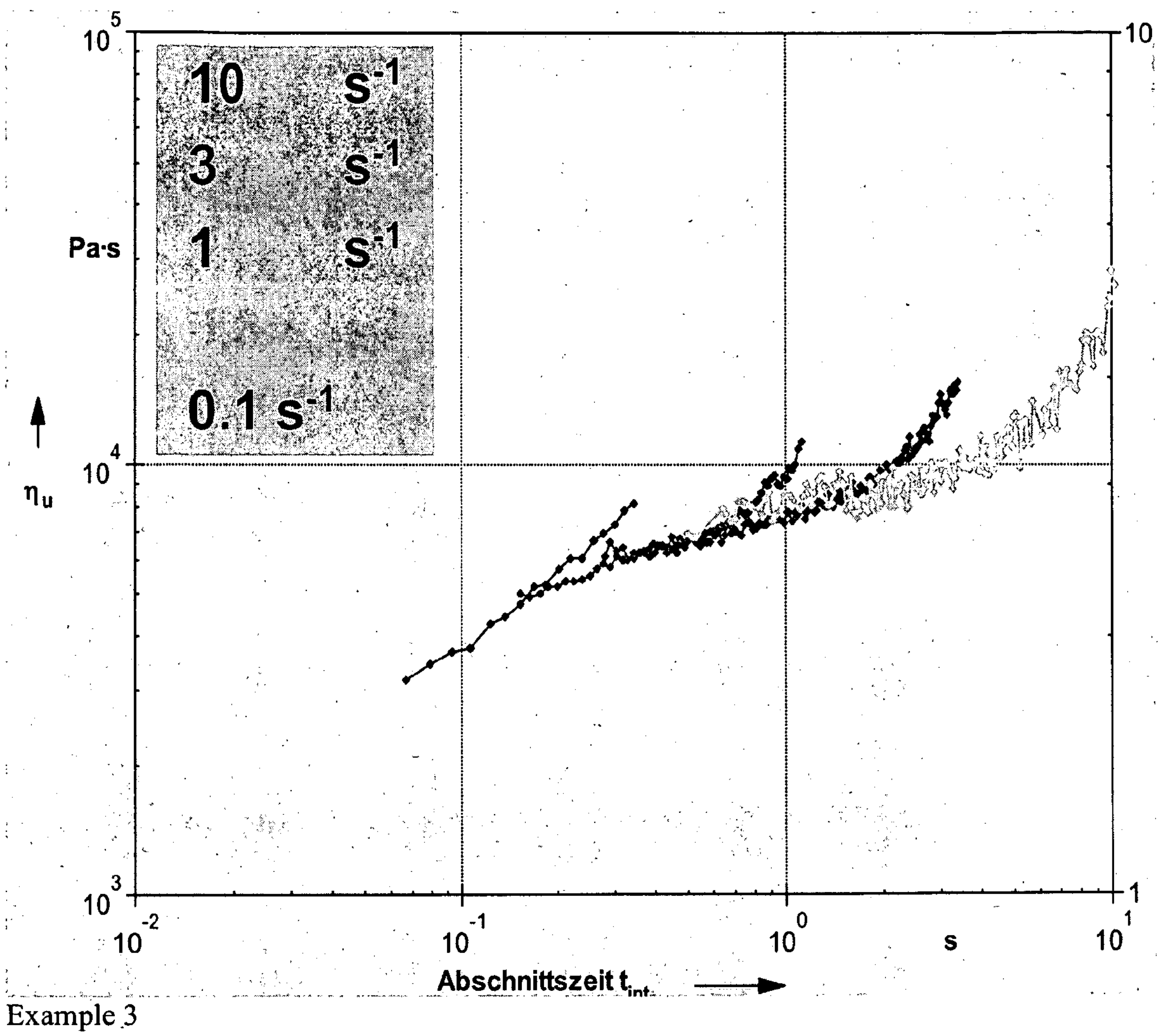


Example 3

FIG. 1 (CONTINUED)

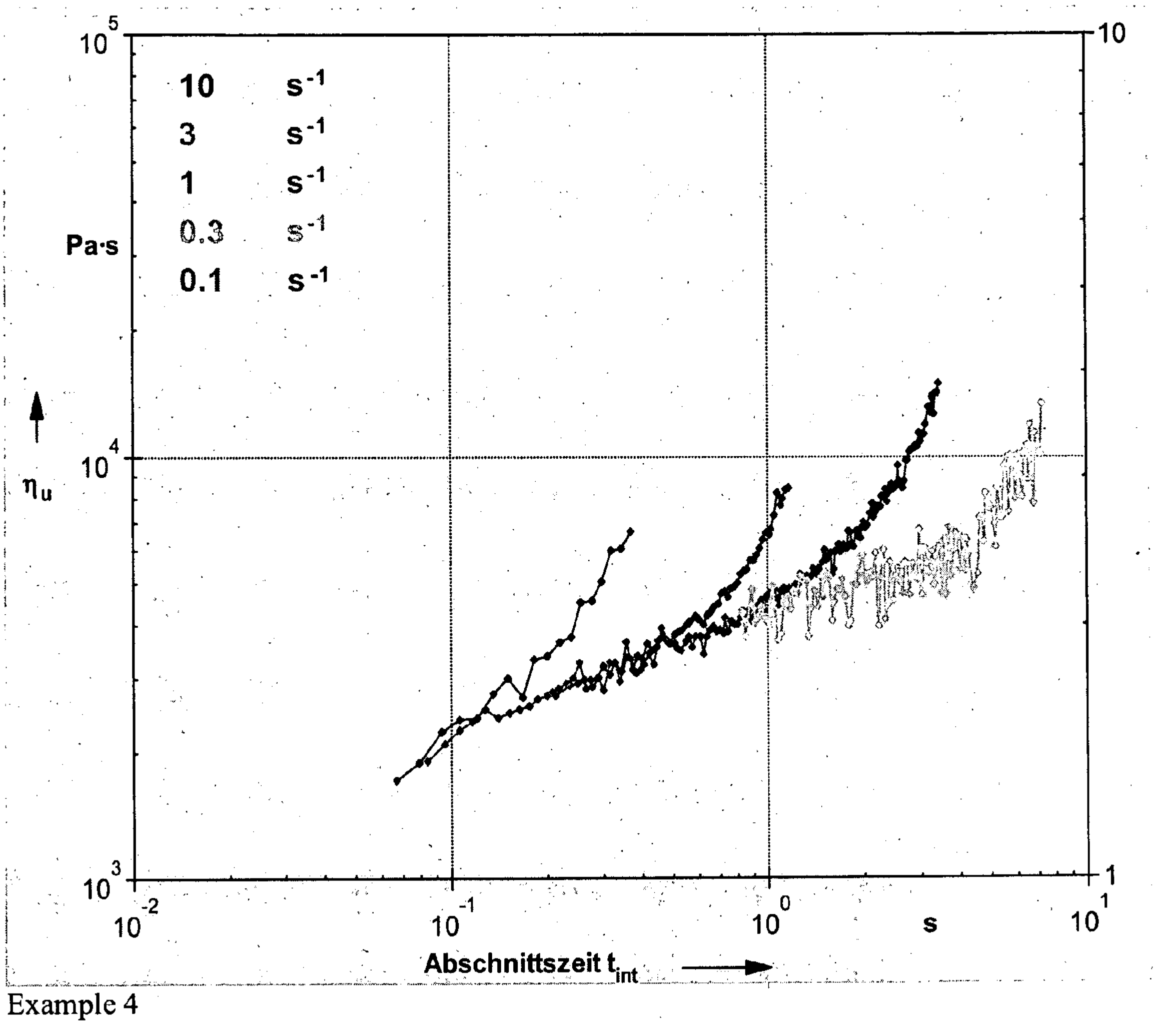


Example 4

FIG. 1 (CONTINUED)

European Patent Office

# EUROPEAN SEARCH REPORT

Application Number
EP 07 25 4418

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| D,X | EP 0 401 993 A (MITSUBISHI PETROCHEMICAL CO [JP]) 12 December 1990 (1990-12-12)<br>* column 1, lines 1-4 *<br>* column 1, lines 8-10 *<br>* column 2, lines 24-26 *<br>* column 2, lines 40-48 *<br>* column 2, lines 51,52 *<br>* column 3, lines 1-9 *<br>* column 3, line 20 *<br>* column 7, lines 57,58 *<br>* column 8, lines 17,18 *<br>* column 10, lines 27-39 *<br>* column 11, line 18 *<br>* column 11, lines 37-42 *<br>* column 11, lines 55,56 *<br>* column 12, lines 14-30 *<br>* column 13, lines 39-46 *<br>* column 13, lines 50,51 *<br>* column 14, lines 27-32 *<br>* column 14, lines 43-46 *<br>* column 15, lines 48-51 *<br>* column 15, lines 48-51 *<br>* column 17, lines 11-23 *<br>* column 17, lines 24-36 *<br>* column 17, lines 41-52 *<br>----- | 1-26 | INV.<br>C08F210/06 |
| X | EP 0 486 293 A (MITSUBISHI PETROCHEMICAL CO [JP] MITSUBISHI CHEM CORP [JP]) 20 May 1992 (1992-05-20)<br>* page 2, lines 5,6 *<br>* page 2, lines 35-50 *<br>* page 5, line 53 - page 6, line 18 *<br>* page 2, line 25 *<br>* page 7, lines 46,47 *<br>* page 8, lines 14-30 *<br>* page 9, lines 40,41 *<br>* page 10, line 45 - page 11, line 15 *<br>* page 21, lines 24-26 *<br>* examples 9-17 *<br>----- | 1-26 | TECHNICAL FIELDS SEARCHED (IPC)<br>C08F |

The present search report has been drawn up for all claims

| Place of search | Date of completion of the search | Examiner |
|---|---|---|
| The Hague | 2 April 2008 | Queste, Sébastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

6

EPO FORM 1503 03.82 (P04C01)

## ANNEX TO THE EUROPEAN SEARCH REPORT ON EUROPEAN PATENT APPLICATION NO. EP 07 25 4418

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2008

| Patent document cited in search report | Publication date | Patent family member(s) | Publication date |
|---|---|---|---|
| EP 0401993 A | 12-12-1990 | DE 69006543 D1 | 24-03-1994 |
| | | DE 69006543 T2 | 26-05-1994 |
| | | JP 2311507 A | 27-12-1990 |
| | | JP 2738562 B2 | 08-04-1998 |
| | | US 4987193 A | 22-01-1991 |
| EP 0486293 A | 20-05-1992 | DE 69118659 D1 | 15-05-1996 |
| | | DE 69118659 T2 | 14-11-1996 |
| | | JP 5001185 A | 08-01-1993 |
| | | US 5229463 A | 20-07-1993 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0401993 A
- US 4366296 A
- EP 0887379 A
- WO 9212182 A
- US 5234879 A
- WO 2004029112 A


### Non-patent literature cited in the description


- *The Society of Rheology,* 2005, 585-606